# EUROPEAN PATENT SPECIFICATION

(11) **EP 1 805 873 B1**
(45) Date of publication and mention of the grant of the patent: **30.09.2009**
(21) Application number: 05796308.4
(22) Date of filing: 19.10.2005
(51) Int. Cl.: H02K 11/00

(54) **AN ELECTRIC MOTOR**
ELEKRTOMOTOR
MOTEUR ELECTRIQUE

(30) Priority: 22.10.2004 TR 200402832
(43) Date of publication of application: 11.07.2007
(73) Proprietor: Arçelik Anonim Sirketi, 34950 Istanbul (TR)
(72) Inventor: EKIN, Cihad, Tuzla 34950 Istanbul (TR); SARIKAYA, Pevrül, Tuzla 34950 Istanbul (TR); BAHADIR, Aydin, Uzeri, Tuzla 34950 Istanbul (TR)
(86) International application number: PCT/IB2005/053418
(87) International publication number: WO 2006/043241

(56) References cited:
- EP-A- 0 029 328
- US-B1- 6 326 879
- PATENT ABSTRACTS OF JAPAN vol. 016, no. 550 (E-1292), 19 November 1992 (1992-11-19) & JP 04 208047 A (MATSUSHITA SEIKO CO LTD), 29 July 1992 (1992-07-29)
- PATENT ABSTRACTS OF JAPAN vol. 1995, no. 11, 26 December 1995 (1995-12-26) & JP 07 222404 A (MATSUSHITA ELECTRIC IND CO LTD), 18 August 1995 (1995-08-18)
- PATENT ABSTRACTS OF JAPAN vol. 2000, no. 07, 29 September 2000 (2000-09-29) & JP 2000 116065 A (SHIBAURA MECHATRONICS CORP), 21 April 2000 (2000-04-21)

## Description

This invention relates to an electric motor wherein a thermal switch is utilized.

In electric motors used for actuation of discharge pumps of household appliances such as washing machines or dishwashers, safety elements like thermal switches are utilized to prevent the overheating of motor coils made of copper wires due to overloading of the motor or locking of the rotor, which may lead to danger of fire. Thermal switches terminate the operation of the motor if the motor temperature exceeds a limit temperature by cutting the electric current. The thermal switches are serially connected to the motor windings and are suitably positioned on the motor to sense the winding temperature. There are various difficulties encountered in adapting a thermal switch after the production of the motor is completed. Thermal switches are connected to the coils by welding, soldering etc. and these methods result in loss of production time and an increase in costs.

In the American Patent no. US 6326879, a thermal switch is utilized in a synchronous mono-phase electric motor, the connections of which are inserted into the inner surface of the end flanges of the winding core and the thermal switch is connected in series to the terminals in the insertion slots of the flanges which provide the outside electric connection of the motor.

In the American Patent no. US 5463522, the thermal switch in a transformer is placed inside a plastic case, and the plastic case is fastened on a stator packet.

In the American Patent no. US4112405, the thermal switch is fit inside an open internal surface of the recess on the side flange of the bobbin where the motor coil is wound and the thermal switch is in contact with the windings.

In the European Patent no. EP 0431238, the thermal switch placed inside a housing is accommodated in the intermediate space between the stator stack and the field winding of the electric motor and fixed in place by the grooves on the stator laminate stack upon which it is accommodated. EP 0 029 328 discloses an electric motor with removable adaptor for connecting therein power leads, a capacitor and a speed change switch.
An electric motor with the features of the preamble of claim 1 is disclosed in JP 04208047.

The aim of the present invention is the realization of an electric motor comprising a thermal switch which can easily be connected or disconnected providing safety by sensing the temperature.

The electric motor realized in order to attain above mentioned aim of the present invention is illustrated in the attached drawings, where:

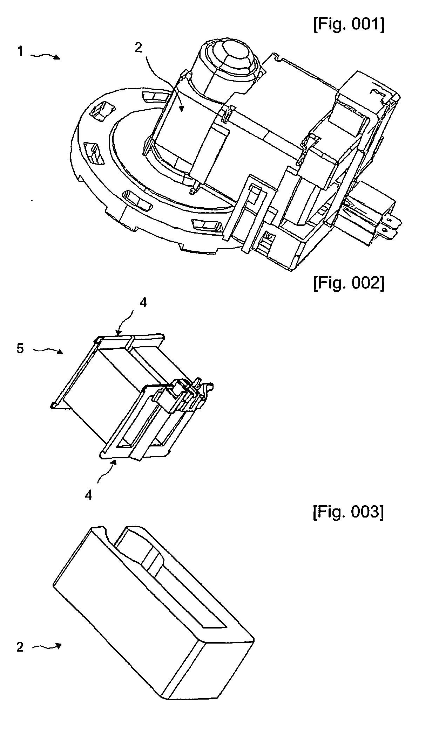

Figure 1- is the perspective view of an electric motor.

Figure 2 - is the perspective view of a winding bobbin

Figure 3 - is the perspective view of a stator.

Figure 4- is the exploded view of a winding bobbin, a thermal switch and an adaptor.

Figure 5- is the perspective view of a winding bobbin grouped with an adaptor.

Figure 6- is the exploded view of a winding bobbin, a thermal switch and an adaptor in an alternative embodiment of the present invention.

Figure 7- is the grouped perspective view of a winding bobbin, a thermal switch and an adaptor in Figure 6.

Figure 8- is the exploded view of a winding bobbin, a thermal switch and an adaptor in another embodiment of the present invention.

Figure 9- is the grouped perspective view of a winding bobbin, a thermal switch and an adaptor in Figure 8.

Elements shown in the drawings are numbered as follows:
1. Electric motor
2. Stator
3. Winding
4. Winding limiter
5. Winding bobbin
6. Thermal switch
7. Adaptor
8. 18,28. Terminal
9. Thermal switch holder
10. Thermal switch place
11. Casing
12. Opening

The electric motor (1) comprises a stator (2) enabling the rotation of the rotor by applying a magnetic field, a winding (3) composed of insulated copper wire, the winding number and the diameter of which is determined according to the desired power and the desired rpm, a winding bobbin (5) preferably made of plastic material, upon which the winding is applied, enabling its positioning on the stator (2) and having more than one winding limiters (4) which limit the winding, a thermal switch (6) which cuts off the electric current by sensing the temperature in cases like rotor locking when the motor (1) is overloaded and an adaptor (7) which allows the connection of the thermal switch to the winding (3) in series and assembled in an attachable/detachable manner on the motor (1).

The adaptor (7) comprises two terminals (8) which allow the electric motor (1) to draw electricity from a power source or the network, one or more winding terminals (18) where the starting and finishing ends of the windings (3) are attached, more than one thermal switch holders (9) preferably made of copper in strip form holding the thermal switch (6) and contacting the thermal switch (6) on a certain surface area and conduct the electric current and heat taken from the winding terminal (18) and the winding (3), and a thermal switch place (10) situated between the thermal switch holders (9) providing the assembly of the thermal switch (6) in an attachable/ detachable manner.

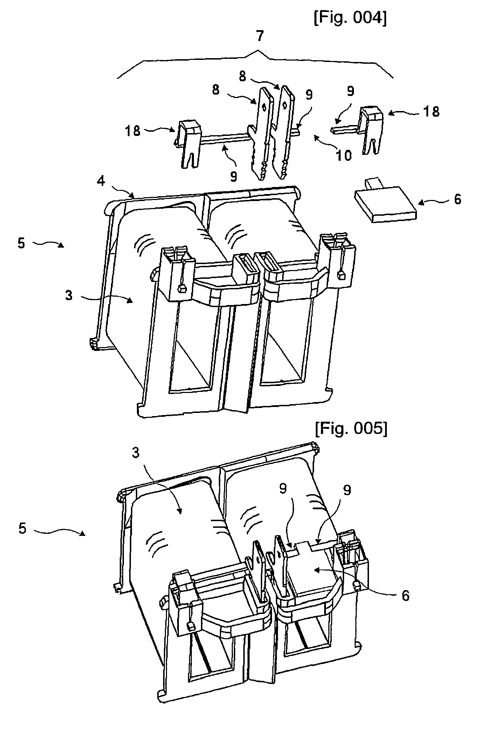

In the embodiment of the present invention, winding process is applied on the winding bobbin (5) and the adaptor (7) is attached preferably on the winding limiter (4). The starting and ending terminals of the winding (3) are attached on the winding terminals (18) which are fixed on the winding limiter (4) and the winding terminals (18) are attached on the thermal switch holders (9) connecting the adaptor (7) to the winding bobbin (5). The thermal switch place (10) is dimensioned so that the thermal switch (6) can be pressed fit in between the thermal switch holders (9). The thermal switch place (10) is composed by spaced positioning of thermal switch holders (9) or by cutting out the portion of the thermal switch holder (9) where the thermal switch (6) will be placed. The thermal switch (6) is pressed fit in the thermal switch place (10) in between two thermal switch holders (9) and attached to the thermal switch holders (9) preferably by various fixing methods. (Figure 4, Figure 5).

When the thermal switch (6) is placed in the thermal switch place (10), the windings (3) complete the circuit formed by the winding terminal (18), the exterior terminal (8) and the thermal switch holders (9) and conduct electric current and at the same time sense the temperature from the thermal switch holders (9). The electric motor (1) continues operation as long as the winding (3) temperature does not rise. When the discharge pump activated by the electric motor (1) is overloaded for any reason or the rotor is locked, winding (3) temperature starts to rise since the current continues to flow through the circuit. The thermal switch (6) connected in series to the circuit and sensing the temperature, cuts off the current by opening the circuit and stops the operation of the electric motor (1). When the winding (3) temperature returns to normal, the thermal switch (6) allows the current to flow by closing the circuit and restarts the electric motor (1).

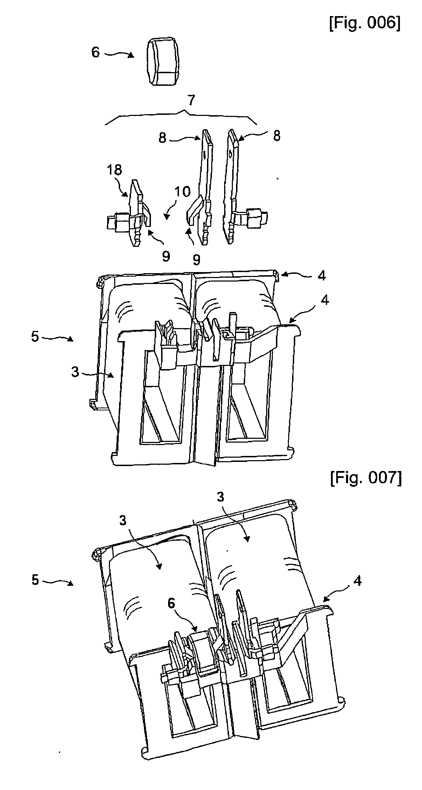

In another embodiment of the present invention, the electric motor (1) comprises an adaptor (7) having thermal switch holders (9) with spring features, where one is situated between the winding terminal (18) and the thermal switch(6), the other between the thermal switch (6) and the terminal (8), enabling the assembly of the thermal switch (6) by simply pressing in between, and a thermal switch (6) in disk shape allowing for easy attachment and detachment. The disk shaped thermal switch (6) is easily pressed fit in the thermal switch place (10) between two thermal switch holders (9) with spring features with no need for methods like soldering, welding etc. and contacted to the thermal switch holders (9) so that it can conduct heat and electricity. When the thermal switch (6) is desired to be displaced, due to its disk shape it can easily be taken out of the thermal switch place (10) since it is not fixed in place by soldering, welding etc. methods. (Figure 6, Figure 7)

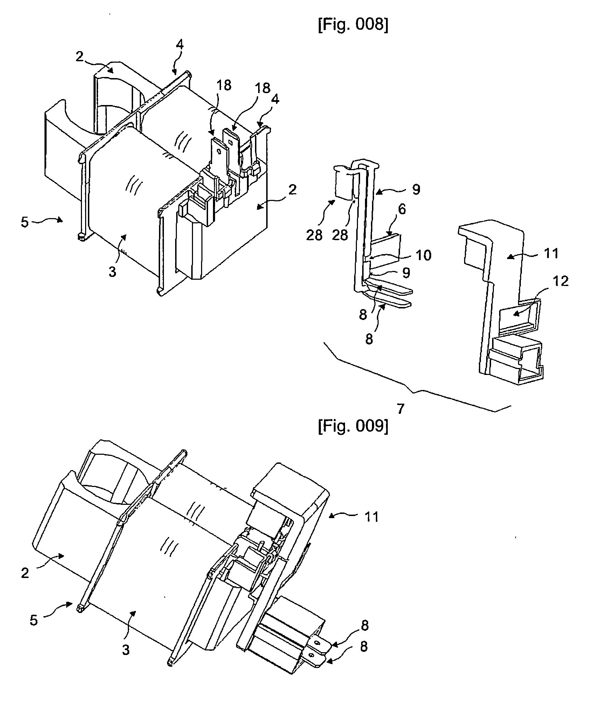

In another embodiment of the present invention, the adaptor (7), also being grouped with the thermal switch (6), is of a build facilitating the easy attachment/detachment of the thermal switch (6) - adaptor (7) group without the application of permanent attachment processes like soldering and/or welding and/or gluing. In this embodiment, the adaptor (7) comprises a casing (11) preferably of plastic material, providing for gathering and protection of its components, has an opening (12) allowing contact of the thermal switch (6) with the stator (2). The thermal switch holders (9) are inserted through the casing (11) so as to be connected to the thermal switch (6) positioned in the opening (2). The adaptor (7) also comprises two adaptor terminals (28) which allow for attachable/detachable attachment to the winding terminals (18) on the winding limiter (4) to which the ends of the winding (3) are fixed. When the adaptor (7) is desired to be assembled on the electric motor (1), the adaptor terminals (28) are fixed to the winding terminals (18) situated on the winding limiter (4). In this embodiment, the electrical connection is provided by the terminals (8) removed from the winding restricters (4) to the end of the adaptor (7). Initially, the electric motor (1) is produced without utilizing a thermal switch (6). The adaptor (7) is attached to the winding terminals (1) situated on the winding limiter (4) by means of two adaptor terminals (28). The thermal switch (6) is made to contact the stator (2) by means of the opening (12) in the casing (11). The connection of the electric motor (1) with the power source is provided by the terminals (8) relocated in the adaptor (2). The thermal switch (6) inserted through the casing (11) contacting the thermal switch terminals (9) completes the circuit and senses the temperature of the electric motor (1) both through the thermal switch holders (9) and the stator (2) which it contacts. When the adaptor (7) is fully displaced, the electric motor (1) is activated by connecting to the power source via the winding terminals (18). (Figure 8, Figure 9)

By eliminating the necessity of unfixing and refixing the permanent connections like soldering or welding, benefits are secured in process simplification, cost of materials and labor when attaching or detaching the thermal switch (6) to or from the electric motor (1).

## Claims

1. An electric motor (1) comprising a stator (2), a winding (3) composed of insulated copper wire, a winding bobbin (5) upon which the winding (3) is coiled, having more than one winding limiters (4) enabling it to be positioned in the stator (2) and limiting the windings, a thermal switch (6) which cuts off electric conduction upon overheating by sensing the temperature, and **characterized by** an adaptor (7):
- allowing the thermal switch (6) to be connected in series to the winding (3) coils
- being assembled to the electric motor (1) in an attachable/detachable manner,
- comprising :
- two terminals (8) enabling drawing of electric energy from a power source,
- one or more winding terminals (18) where the starting and finishing ends of the winding (3) wire are attached and
- more than one thermal switch holders (9) holding the thermal switch (6) body, contacting the thermal switch (6) body on a certain surface area and conduct the electric current and heat from the winding terminal (18) and the windings (3) and
- having a thermal switch place (10) situated between the thermal switch holders (9) which allow for placement of the thermal switch (6) body so that said switch can be attached or detached.

2. An electric motor (1) as in Claim 1, **characterized by** the adaptor (7) comprising the thermal switch holders (9) with spring features, where the thermal switch (6) is pressed fit in between and a disk shaped thermal switch (6) enabling easy attachment or detachment.

3. An electric motor (1) as in Claim 1, **characterized by** the adaptor (7) comprising a casing (11) providing forgathering and protection of its components, having an opening (12) allowing contact of the thermal switch (6) body with the stator (2).

4. An electric motor (1) as in Claim 3, **characterized by** the adaptor (7) comprising the thermal switch holders (9) which are inserted through the casing (11) so as to be connected to the thermal switch (6) body positioned in the opening (2).

5. An electric motor (1) as in Claim 4, **characterized by** the adaptor (7) comprising two adaptor terminals (28) which allow for attachable detachable attachment to the winding terminals (18) on the winding limiter (4) to which the ends of the winding (3) wire are fixed.

## Patentansprüche

1. Elektromotor (1), umfassend einen Ständer (2), eine Wicklung (3), die aus isoliertem Kupferdraht besteht, eine Wicklungsspule (5), auf die die Wicklung (3) gewickelt ist, und die mehrere Wicklungsbegrenzer (4) aufweist, welche ihre Anordnung im Ständer (2) ermöglichen und die Wicklungen (3) begrenzen, einen Wärmeschutzschalter (6), der bei Überhitzung das elektrische Leiten unterbricht, indem er die Temperatur misst, **gekennzeichnet durch** einen Adapter (7):
- der es ermöglicht, den Wärmeschutzschalter (6) seriell mit der Spulen der Wicklung (3) zu verbinden,
- der derart am Elektromotor (1) montiert ist, dass er lösbar daran angebracht ist,
- umfassend:
- zwei Klemmen (8), die es ermöglichen, elektrische Energie von einer Leistungsquelle zu beziehen,
- eine oder mehrere Wicklungsklemmen (18), an denen das Anfangs- und das Endstück des Drahts der Wicklung (3) befestigt sind, und
- mehrere Wärmeschutzschalterhalterungen (9), die den Körper des Wärmeschutzschalters (6) halten, den Körper des Wärmeschutzschalters (6) auf eine bestimmte Oberfläche berühren, und den elektrischen Strom und Wärme von der Wicklungsklemme (18) und den Wicklungen (3) leiten, und
- aufweisend einen Wärmeschutzschaltersitz (10), der zwischen den Wärmeschutzschalterhalterungen (9) angeordnet ist und ein Anordnen des Körpers des Wärmeschutzschalters (6) derart ermöglicht, dass der gesagte Schalter (6) sich anbringen oder lösen lässt.

2. Elektromotor (1) nach Anspruch 1, **dadurch gekennzeichnet, dass** der Adapter (7) die Wärmeschutzschalterhalterungen (9) umfasst, welche eine Federfunktion aufweisen, und zwischen die der Wärmeschalter (6) mit Druck eingesetzt wird, wobei ein scheibenförmiger Wärmeschutzschalter (6) ein leichtes Anbringen oder Lösen ermöglicht.

3. Elektromotor (1) nach Anspruch 1, **dadurch gekennzeichnet, dass** der Adapter (7) ein Gehäuse (11) umfasst, das ein Zusammenführen und Schützen seiner Bauteile ermöglicht, und das eine Öffnung (12) aufweist, die einen Kontakt zwischen dem Körper des Wärmeschutzschalters (6) und dem Ständer (2) erlaubt.

4. Elektromotor (1) nach Anspruch 3, **dadurch gekennzeichnet, dass** der Adapter (7) die Wärmeschutzschalterhalterungen (9) umfasst, die durch das Gehäuse (11) hindurchgeführt sind, derart, dass sie mit dem Körper des Wärmeschutzschalters (6) verbunden sind, der in der Öffnung (2) angeordnet ist.

5. Elektromotor (1) nach Anspruch 4, **dadurch gekennzeichnet, dass** der Adapter (7) zwei Adapterklemmen (28) umfasst, die das lösbare Anbringen an den Wicklungsklemmen (18) am Wicklungsbegrenzer (4) ermöglichen, an denen die Enden der Wicklung (3) befestigt sind.

## Revendications

1. Un moteur électrique (1) comprenant un stator (2), un enroulement (3), composé de fils de cuivre isolés, une bobine d'enroulement (5) sur lesquelles le bobinage (3) est enroulée, ayant plusieurs limiteurs de bobinage (4) lui permettant d'être placé dans le stator (2) et limitant les enroulements, un interrupteur thermique (6) qui coupe la conduction électrique par détection de la surchauffe du capteur de la température, et **caractérisée par** un adaptateur (7) :
- permettant à l'interrupteur thermique (6) d'être connecté en série avec le bobinage (3) de bobines,
- assemblé au moteur électrique (1) d'une manière montable/démontable,
- comprenant :
- deux terminaux (8) permettant le tirage de l'énergie électrique à partir d'une source d'énergie,
- un ou plusieurs terminaux d'enroulement (18) où les extrémités de début et de fin du fil d'enroulement (3) sont attachés et
- plus d'un teneur d'interrupteur thermique (9) tenant le corps de l'interrupteur thermique (6), en contact avec le corps de l'interrupteur thermique (6) sur une certaine surface et conduit le courant électrique et la chaleur venant du bobinage du terminal (18) et du bobinage (3), et
- ayant une place d'interrupteur thermique (10) située entre les teneurs d'interrupteur thermique (9) qui permettent l'emplacement du corps de l'interrupteur thermique (6) de manière à ce que ledit interrupteur (6) puisse être attaché ou détaché.

2. Un moteur électrique (1) selon la Revendication 1, **caractérisé par** l'adaptateur (7) comprenant les teneurs d'interrupteur thermique (9) aux caractéristiques de ressort, où l'interrupteur thermique (6) est pressé entre ces formes et un disque en forme d'interrupteur thermique (6) permettant de faciliter l'attachement ou le détachement.

3. Un moteur électrique (1) selon la Revendication 1, **caractérisé par** l'adaptateur (7) comprenant un boîtier (11) fournissant le rassemblement et la protection de ses éléments, ayant une ouverture (12) permettant un contact du corps de l'interrupteur thermique (6) avec le stator (2).

4. Un moteur électrique (1) selon la Revendication 3, **caractérisé par** l'adaptateur (7) comprenant les teneurs d'interrupteur thermique (9) qui sont insérés dans le boîtier (11) de manière à être connectés au corps de l'interrupteur thermique (6) placé dans l'ouverture (2).

5. Un moteur électrique (1) selon la Revendication 4, **caractérisé par** l'adaptateur (7) comprenant deux terminaux d'adaptateur (28) qui permettent un attachement montable/démontable aux terminaux d'enroulement (18) sur les limiteurs de bobinage (4) auxquels les extrémités du fils de bobinage (3) sont fixées.
